# EUROPEAN PATENT APPLICATION

(11) **EP 1 617 688 A1**
(43) Date of publication of application: **18.01.2006**
(21) Application number: 05105404.7
(22) Date of filing: 17.06.2005
(51) Int. Cl.: H04Q 7/24, G06F 9/445, H04N 7/00

(54) **Upgrading programs in a wireless communication system**

(30) Priority: 13.07.2004 KR 2004054439
(71) Applicant: SAMSUNG ELECTRONICS CO., LTD., Suwon-si, Gyeonggi-Do 442-742 (KR)
(72) Inventor: Lee, Bong-geun, Suwon-si Gyeonggi-do (KR)
(74) Representative: Geary, Stuart Lloyd

(57) **Abstract**

A wireless communication system having a program upgrade function and a method thereof. The wireless communication system includes a transmitter to download a common upgrade program and a transmitter side upgrade program from a memory card which stores the common upgrade program, the transmitter side upgrade program and a receiver side upgrade program, and to transmit the common upgrade program and the receiver side program over a wireless channel, and a receiver to receive and store the common upgrade program and the receiver side upgrade program that are transmitted over the wireless channel. The transmitter and receiver can upgrade programs by employing only one memory card and a wireless channel.

## Description

The invention relates to a wireless communication system having a program upgrade function. More specifically, the invention relates to a method and apparatus for upgrading programs on a transmitter and a receiver by using a memory card and a wireless channel.

A wireless communication system may include a first and a second device for example a transmitter and a receiver communicating via a wireless channel. The transmitter transmits data signals including audio and video signals to the receiver through the wireless channel, and the receiver processes the data signals. The audio and video signals may be processed in the receiver in order to reproduce the audio and the video. The transmitter may further transmit additional information about the transmitted data to the receiver over the wireless channel, and it may receive from the receiver an ACK signal in response to the transmitted additional information.

The conventional transmitter and receiver normally store programs that perform specific communication operations. For example, the transmitter and the receiver may respectively have a booting program and a data transmission, or data receiving, program. Usually a memory card is used to upgrade the programs stored in the transmitter and the receiver. That is, if a user wants to upgrade the programs stored in the transmitter, the user needs to use a transmitter memory card where the data transmission program is stored. Similarly, if the user wants to upgrade the programs for receiving data stored in the receiver, the user needs to use a receiver memory card where the programs for receiving data are stored. Therefore, in a conventional wireless communication system, if the user wants to upgrade the data transmission and data receiving programs on the transmitter and the receiver of the wireless communication system, the user has to upgrade the data transmission and data receiving programs on the transmitter and the receiver separately. Since the transmitter memory card and the receiver memory card used in the conventional wireless communication system are separately manufactured, manufacturing costs of the memory cards increase.

A system, according to the invention, includes a first device including the data input means for receiving upgrade program code. A system, according to the invention, is characterised by the first device having transmission means and being configured to transmit upgrade program code, received by the data input means, and a second device including receiving means for receiving upgrade program code from the transmission means of the first device and configured to upgrade itself using upgrade program code received by the receiving means.

The transmission means and the receiving means may be wireless transmission means and receiving means.

Thus, the invention provides a wireless communication system capable of upgrading a first and a second device without considerable difficulty by employing only one single memory card and a wireless channel.

The input means, in the system according to the invention, may be a card reader. The input means may further be a serial interface, a parallel port, a universal serial bus (USB) port, a local area network (LAN) interface, an Internet interface, or a wireless interface.

According to the invention there is also provided a device for use as the first device in the system, the device comprising data input means for receiving upgrade program code and being configured to upgrade itself using upgrade program code received by the data input means, the device further comprising transmission means for transmitting upgrade program code, received by the data input means.

Additionally preferred features of the invention are defined in claims 7 to 43.

Embodiments of the invention will now be described, by way of example, with reference to the accompanying drawings, in which:
Figure 1 is a schematic block diagram of a wireless communication system having a program upgrade function according to an embodiment of the invention;
Figure 2 illustrates a common upgrade program, a transmitter side upgrade program and a receiver side upgrade program stored in a memory card of Figure 1;
Figure 3 is a flowchart of a method of upgrading programs in the wireless communication system of Figure 1; and
Figure 4 is a schematic block diagram of a wireless communication system having a program upgrade function according to another embodiment of the invention.

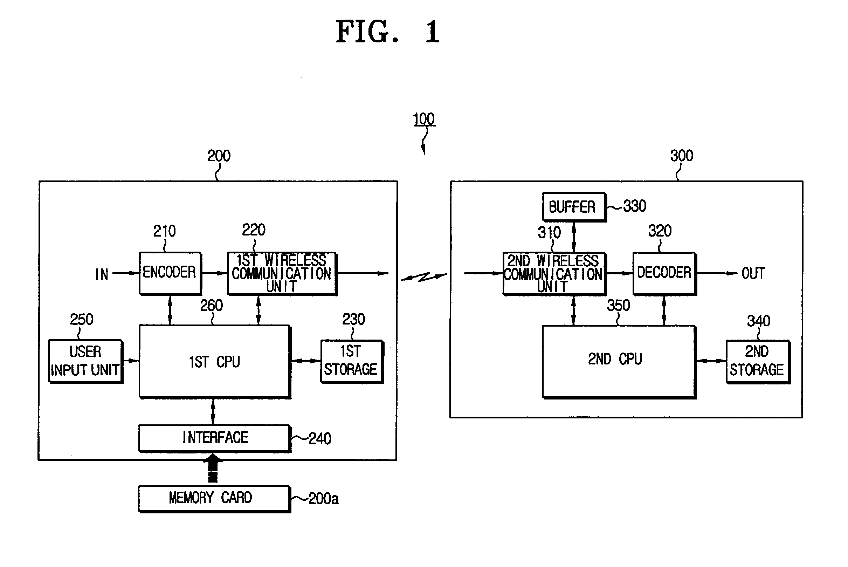

Referring to Figure 1, a system 100, employing wireless communication between its constituent devices, includes a transmitter 200 and a receiver 300. The transmitter 200 transmits audio and video signals and additional control information about the transmitted data to the receiver 300 over a wireless channel. The audio and video signals are transmitted uni-directionally while the additional information is transmitted bi-directionally.

The transmitter 200 may be a set-top box for encoding audio and video signals from an image source and transmitting the encoded audio and video signals to the receiver 300. The receiver 300 may be a digital TV for outputting the audio and video signals from the transmitter 200.

As shown in Figure 1, the transmitter 200 includes an encoder 210, a first wireless communication unit 220, a first storage 230, an interface 240, a user input unit 250, and a first central processing unit (CPU) 260. The encoder 210 encodes (or compresses) the audio and video signals in an MPEG (Motion Pictures Experts Group) format. The image source, providing the audio and video signals, may include, but is not limited to, a DVD player, a satellite, or a broadcasting station.

The first wireless communication unit 220 is configured to transmit, in addition to the encoded audio and video signals from the encoder 210, a common upgrade program and a receiver side upgrade program stored in a memory card 200a to the receiver 300 over the wireless channel.

The first storage 230 stores a transmitter control program to control and manage the overall operation of the transmitter 200, a transmitter boot program to boot the transmitter 200, and a transmitter side program to execute diverse functions of the transmitter 200. The transmitter side program may be an application program for the transmitter. The boot program and the transmitter side program are pre-stored in the first storage 230 and may be upgraded to new versions.

The interface 240 is mounted with the memory card 200a and connects the memory card 200a and the first CPU 260.

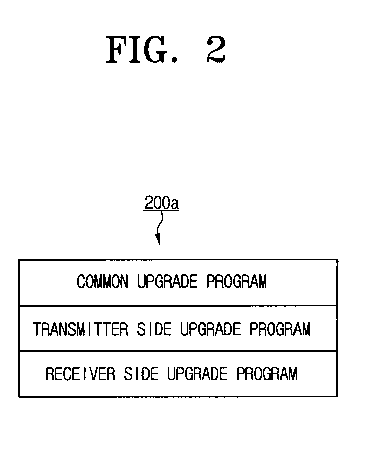

Referring to Figure 2, the memory card 200a is a storage medium that stores the common upgrade program, the transmitter side upgrade program, and the receiver side upgrade program. The memory card 200a may be detachably attached to the transmitter 200 by the interface 240. Examples of the memory card 200a include memory sticks, media cards, flash memory cards, or smart media.

The transmitter 200 may use pre-stored program code common to both the receiver and the transmitter. A program including program code common to both the receiver and the transmitter may be referred to as a common program. A common program may include, for example, the transmitter boot program and a receiver boot program. The common upgrade program is primarily used to upgrade a common program that is pre-stored in the first storage 230. The common upgrade program may be a new version of a pre-stored program common to both the transmitter 200 and the receiver 300.

The transmitter side upgrade program upgrades the transmitter side program used in the transmitter 200. Similarly, the receiver side upgrade program upgrades a receiver side program used in the receiver 300.

The user input unit 250 is a user interface to output to the first CPU 260 a signal to request a function that is supported by the transmitter 200. To this end, the user input unit 250 includes a plurality of operation keys including number keys, direction keys, and an OK key.

When the memory card 200a is mounted on the interface 240, the user input unit 250 outputs to the first CPU 260 a program upgrade request signal to upgrade the common program and the transmitter side program that are pre-stored in the first storage 230.

The first CPU 260 controls the overall operation of the transmitter 200 according to the transmitter control program stored in the first storage 230 and an operation of the user input unit 250. Accordingly, the first CPU 260 controls the encoder 210 and the first wireless communication unit 220 to encode the input audio and video signals and transmit the encoded audio and video signals to the receiver 300.
In particular, the first CPU 260 downloads, when the memory card 200a is mounted on the interface 240, the common upgrade program and the transmitter side upgrade program from the memory card 200a onto the first storage 230, in order to upgrade the common program and the transmitter side program that are pre-stored in the first storage 230.

After having received the program upgrade request signal, the first CPU 260 checks the version of each program before determining whether to download the common upgrade program and the transmitter side upgrade program from the memory card 200a. The first CPU 260 only downloads the common upgrade program and the transmitter side upgrade program from the memory card 200a when they are later versions of the common program and the transmitter side program that are pre-stored in the first storage 230.

When the pre-stored common program and the pre-stored transmitter side program have been upgraded by the common upgrade program and the transmitter side upgrade program, respectively, the first CPU 260 controls the first wireless communication unit 220 to transmit to the receiver 300 the common upgrade program and the receiver side upgrade program stored in the memory card 200a. The common upgrade program and the receiver side upgrade program are subsequently transmitted from the transmitter 200 to the receiver 300 over the wireless channel.

The receiver 300 upgrades the common program and the receiver side program that are pre-stored therein with the common upgrade program and the receiver side upgrade program that are transmitted over the wireless channel.

The receiver 300 includes a second wireless communication unit 310, a decoder 320, a buffer 330, a second storage 340, and a second CPU 350. The second wireless communication unit 310 receives the audio and video signals from the transmitter 200, and provides the received audio and video signals to the decoder 320. Also, the second wireless communication unit 310 receives the common upgrade program and the receiver side upgrade program from the transmitter 200, and provides the received common upgrade and receiver side upgrade programs to the buffer 330.

The decoder 320 decodes the audio and video signals provided from the second wireless communication unit 310 in the MPEG format. The buffer 330 temporarily stores the common upgrade program and the receiver side upgrade program retrieved from the second wireless communication unit 310. The second storage 340 stores a receiver control program to control and manage the overall operation of the receiver 300, the receiver boot program to boot the receiver 300, and the receiver side program to execute diverse functions of the receiver 300. The receiver side program may be an application program for the receiver. The boot program and the receiver side program are pre-stored in the second storage 340 and may be upgraded to new versions.

The second CPU 350 controls the overall operation of the receiver 300 on the basis of the receiver control program stored in the second storage 340. Accordingly, the second CPU 350 controls the second wireless communication unit 310 and the decoder 320 to decode the input audio and video signals from the second wireless communication unit 310. The second CPU 350 also controls the second wireless communication unit 310 to provide the buffer 330 with the common upgrade program and the receiver side upgrade program, and compares the versions of the common upgrade program and the receiver side upgrade program that are temporarily stored in the buffer 330 with the pre-stored common program and the pre-stored receiver side program. If the common upgrade and receiver side upgrade programs in the buffer 330 are new versions, the second CPU 350 downloads the common upgrade program and the receiver side upgrade program from the buffer 330 into the second storage 340 and upgrades the pre-stored common program and the pre-stored receiver side program.

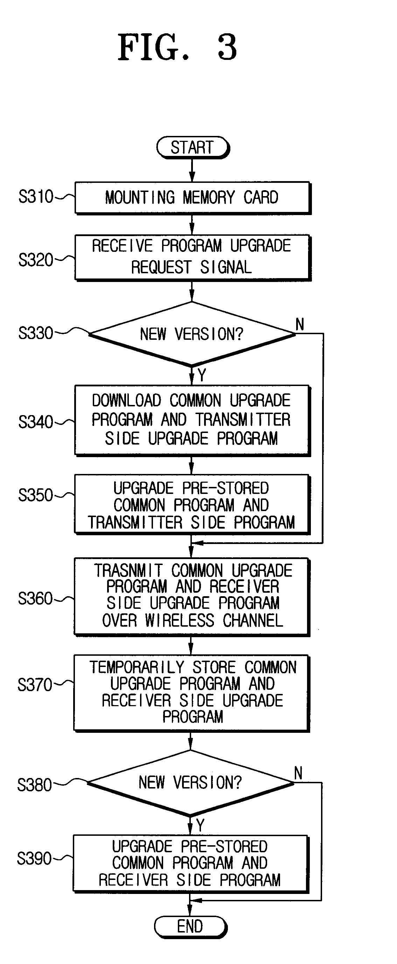

The method of upgrading the programs in the wireless communication system 100 will now be described with respect to Figure 3. When the program upgrade request signal is received from the user input unit 250 after the memory card 200a is mounted on the interface 240, the first CPU 260 checks if the common upgrade program and the transmitter side upgrade program in the memory card 200a are new versions (S310, S320, S330). More specifically, if the common upgrade program and the transmitter side upgrade program stored in the memory card 200a are later versions than the pre-stored common program and the pre-stored transmitter side program, respectively, stored in the first storage 230, the first CPU 260 determines that the versions of the common upgrade and transmitter side upgrade programs in the memory card 200a are new, compared with the pre-stored common and transmitter side programs in the first storage 230.

If the common upgrade and transmitter side upgrade programs in the memory card 200a are new versions in operation 330, the first CPU 260 downloads the common upgrade program and the transmitter side upgrade program from the memory card 200a onto the first storage 230 (S340). The first CPU 260 upgrades the common program and the transmitter side program that are pre-stored in the first storage 230 with the downloaded common upgrade program and transmitter side upgrade program (S350).

Following the upgrade, the first CPU 260 controls the first wireless communication unit 220 to read the common upgrade program and the receiver side upgrade program from the memory card 200a and to transmit the common upgrade and receiver side upgrade programs to the receiver 300 (S360). The second CPU 350 controls the second wireless communication unit 310 to receive the common upgrade program and the receiver side upgrade program that are transmitted over the wireless channel, and to provide the common upgrade program and the receiver side upgrade program to be temporarily stored in the buffer 330 (S370).

The second CPU 350 checks whether the common upgrade program and the receiver side upgrade program that are temporarily stored in the buffer 330 are new versions (S380). If the temporarily stored common upgrade program and the temporarily stored receiver side upgrade program are new versions, the second CPU 350 downloads the temporarily stored common upgrade program and the temporarily stored receiver side upgrade program from the buffer 330 into the second storage 340, and upgrades the pre-stored common program and the pre-stored receiver side program (S390).

The memory card 200a may be mounted on one of the transmitter 200 (that is, the set-top box) and the receiver 300 (that is, the digital TV) and may upgrade the pre-stored common and transmitter side programs installed in the transmitter 200 and the pre-stored common and receiver side programs installed in the receiver 300. In other words, unlike a conventional wireless communication system using two separate memory cards to upgrade the programs of the transmitter and the receiver, the wireless communication system, according to the invention, uses only one memory card 200a to upgrade the pre-stored common and transmitter side programs of the transmitter 200 and the pre-stored common and receiver side programs of the receiver 300.

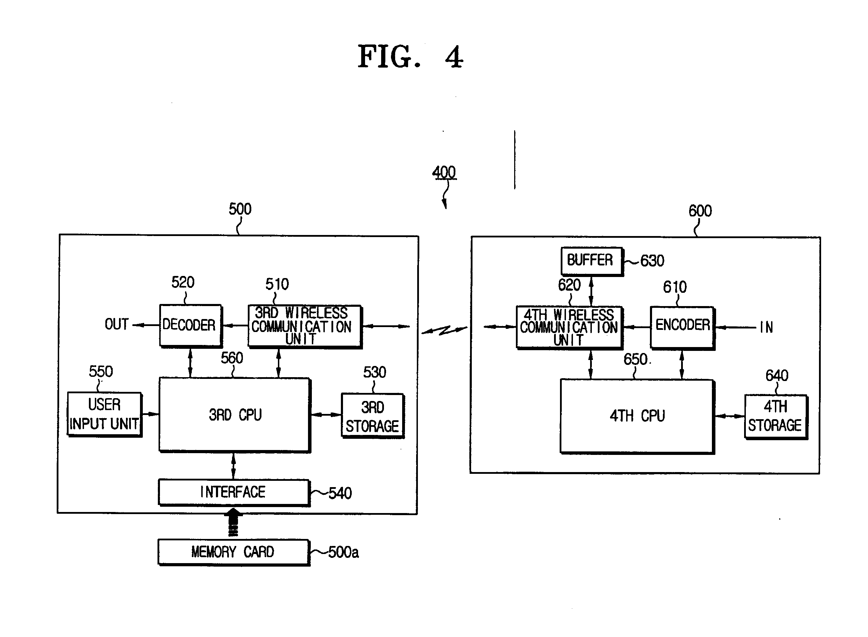

As shown in Figure 4, another system 400, employing wireless communication between its constituent devices, includes a memory card 500a, a device having an upgrade transmitting function (the "transmitter") 500 and a device having an upgrade receiving function (the "receiver") 600. In this embodiment, the transmitter 500 has a primary function as a receiver of the audio and video signals but includes the apparatus for loading the upgrade programs from the memory card 500a and for transmitting the upgrade programs to the receiver 600.

The receiver 600 is the set-top box for encoding input audio and video signals from an image source and transmitting the encoded signals to the transmitter 500. The transmitter 500 may be the digital TV for outputting audio and video signals transmitted from the receiver 600. The transmission and reception of audio, video and additional data signals by transmitter 500 and receiver 600 are similar to the transmission and reception of audio, video and additional data signals of the transmitter 200 and the receiver 300 of Figure 1.

The transmitter 500 includes a third wireless communication unit 510, a decoder 520, a third storage 530, an interface 540, a user input unit 550, and a third CPU 560. The third wireless communication unit 510 receives the audio and video signals that are transmitted from the receiver 600, and provides the programs to the decoder 520. The decoder 520 decodes the received audio and video signals provided from the third wireless communication unit 510 in the MPEG format.

The third storage 530 stores a TV receiver control program, a TV receiver boot program for booting the transmitter 500, and a TV receiver side program to execute predetermined functions. The TV receiver boot program and the TV receiver side program are pre-stored in the third storage 530 and may be upgraded to new versions. Some of the programs in the third storage 530 include program code common to both the transmitter 500 and the receiver 600. A program including code common to both the transmitter 500 and the receiver 600 may be referred to as a common program. A common upgrade program may upgrade a pre-stored common program stored in third storage 530.

The interface 540 is mounted with the memory card 500a, and connects the memory card 500a and the third CPU 560. The memory card 500a is similar to the memory card 200a as shown in Figure 2, and is a storage medium to store the common upgrade program, the TV receiver side upgrade program, and the TV transmitter side upgrade program. The memory card 500a may be detachably attached to the transmitter 500 by the interface 540. The interface 540 can receive a memory card 500a.

When the memory card 500a is mounted on the interface 540, the user input unit 550 outputs to the third CPU 560 a program upgrade request signal to upgrade the common program and the TV receiver side program that are pre-stored in the third storage 530.

The third CPU 560 controls the overall operation of the transmitter 500, on the basis of the TV receiver control program stored in the third storage 530. Accordingly, the third CPU 560 controls the third wireless communication unit 510 and the decoder 520 to receive and decode the audio and video signals transmitted from the receiver 600.

Additionally, the third CPU 560 downloads, when the memory card 500a is mounted on the interface 540, the common upgrade program and the TV receiver side upgrade program from the memory card 500a onto the third storage 530, in order to upgrade the common program and the TV receiver side program that are pre-stored in the third storage 530. Following the upgrade, the third CPU 560 controls the third wireless communication unit 510 to transmit the common upgrade program and the TV transmitter side upgrade program stored in the memory card 500a to the receiver 600. The common upgrade program and the TV transmitter side upgrade program are transmitted to the receiver 600 over a wireless channel.

The receiver 600 upgrades a common program and a TV transmitter side program that are pre-stored therein with the common upgrade program and the TV transmitter side upgrade program that are transmitted from the transmitter 500 over the wireless channel. The receiver 600 includes an encoder 610, a fourth wireless communication unit 620, a buffer 630, a fourth storage 640, and a fourth CPU 650. The encoder 610 encodes the input audio and video signals in the MPEG format. The fourth wireless communication unit 620 transmits the input audio and video signals from the encoder 610 to the transmitter 500 over the wireless channel. Also, the fourth wireless communication unit 620 receives the common upgrade program and the TV transmitter side upgrade program from the transmitter 500, and provides the common upgrade and TV transmitter side upgrade programs to the buffer 630 to be stored temporarily.

The fourth storage 640 stores a TV transmitter control program, a TV transmitter boot program to boot the receiver 600, and the TV transmitter side program to execute diverse functions of the receiver 600. The TV transmitter boot program and the TV transmitter side program are pre-stored in the fourth storage 640 and may be upgraded to new versions. The common upgrade program may upgrade the pre-stored programs, common to both the transmitter 500 and the receiver 600, stored in the fourth storage 640.

The fourth CPU 650 controls the overall operation of the receiver 600 on the basis of the TV transmitter control program stored in the fourth storage 640. Accordingly, the fourth CPU 650 controls the fourth wireless communication unit 620 to provide the buffer 630 with the common upgrade program and the TV transmitter side upgrade program received from the transmitter 500.

If the common upgrade program and the TV transmitter side upgrade program that are temporarily stored in the buffer 630 are later versions than the common program and the TV transmitter side program that are pre-stored in the fourth storage 640, the fourth CPU 650 downloads the common upgrade program and the TV transmitter side upgrade program from the buffer 630 into the fourth storage 640, thereby upgrading the pre-stored common program and the pre-stored TV transmitter side program with the downloaded common upgrade program and TV transmitter side upgrade program, respectively.

As described above, the memory card 500a is mounted on only the transmitter 500 (that is, a digital TV), and upgrades the pre-stored common and TV receiver side programs installed in the transmitter 500 and the pre-stored common and TV transmitter side programs installed in receiver 600.

Moreover, the transmitters 200 and 500 of the wireless communication systems 100 and 400 are capable of downloading upgrade programs not only from the memory cards 200a and 500a, but also from a computer (not shown) where the common upgrade program and the transmitter and receiver side upgrade programs are stored. In this embodiment, the transmitter 200 or 500 is connected to the computer by, for example, a serial interface connection, a parallel connection, a universal serial bus (USB) connection, a local area network (LAN) connection, an Internet connection, or a wireless connection, in order to receive the common upgrade program and the transmitter and receiver side upgrade programs. Since the computer stores the common upgrade program and the transmitter and receiver upgrade programs, the computer is used in place of the memory card 200a or 500a.

As described above, the invention allows for the upgrade of programs in the transmitter and the receiver of the wireless communication system by employing only a single memory card storing the common upgrade program, the TV transmitter side upgrade program, and the TV receiver side upgrade program. The use of one memory card reduces the manufacturing cost because the single memory card can be used to upgrade both a transmitter and a receiver.

The programs common to the transmitter and the receiver can be upgraded using the memory card. Thus, it is possible to reduce the capacity of the entire program stored in the memory card.

Although only a few embodiments of the present invention have been shown and described, it will be appreciated by those skilled in the art that changes may be made in these embodiments.

## Claims

1. A system (100, 400) comprising:
a first device (200, 500) including data input means (240, 540) for receiving upgrade program code and configured to upgrade itself using upgrade program code received by the data input means (240, 540),
**characterised by**
the first device (200, 500) having transmission means (220, 510) and being configured to transmit upgrade program code, received by the data input means (240, 540), and
a second device (300, 600) including receiving means (310, 620) for receiving upgrade program code from the transmission means (220, 510) of the first device (200, 500) and configured to upgrade itself using upgrade program code received by the receiving means (310, 620).

2. A system according to claim 1, wherein the transmission means and the receiving means (220, 310; 510, 620) are wireless transmission means and receiving means.

3. A system according to claim 1 or 2, wherein the input means (240, 540) is a card reader.

4. A system according to claim 1 or 2, wherein the input means (240, 540) is a serial interface, a parallel port, a universal serial bus (USB) port, a local area network (LAN) interface, an Internet interface, or a wireless interface.

5. A system according to any preceding claim wherein the second device (300) is a television.

6. A device (200, 500) for use as the first device in a system (100, 400) according to any preceding claim, the device comprising data input means (240, 540) for receiving upgrade program code and being configured to upgrade itself using upgrade program code received by the data input means (240, 540),
the device further comprising transmission means (220, 510) for transmitting upgrade program code, received by the data input means (240, 540).

7. A wireless communication system having a program upgrade function, the system comprising:
a transmitter to download a common upgrade program, a transmitter side upgrade program and a receiver side upgrade program from a memory card and to transmit the common upgrade program and the receiver side program over a wireless channel; and
a receiver to receive and store the common upgrade program and the receiver side upgrade program that are transmitted over the wireless channel.

8. The system according to claim 7, wherein the common upgrade program upgrades existing common programs pre-stored in the transmitter and the receiver.

9. The system according to claim 7, wherein the transmitter upgrades an existing common program and an existing transmitter side program with the downloaded common upgrade program and transmitter side upgrade program, respectively.

10. The system according to claim 7, wherein the transmitter comprises:
an interface on which the memory card is mounted;
a first storage to store a predetermined common program and a predetermined transmitter side program;
a first wireless communication unit to transmit the common upgrade program and the receiver side upgrade program to the receiver over the wireless channel; and
a first CPU to download the common upgrade program and the transmitter side upgrade program from the memory card onto the first storage to upgrade the predetermined common program and the predetermined transmitter side program if the memory card is mounted on the interface, and the first CPU to control the first wireless communication unit to transmit the common upgrade program and the receiver side upgrade program stored in the memory card.

11. The system according to claim 10, wherein the first CPU upgrades the predetermined common program and the predetermined transmitter side program, if the common upgrade program and the transmitter side upgrade program stored in the memory card are later versions than the predetermined common program and the predetermined transmitter side program.

12. The system according to claim 7, wherein the receiver comprises:
a second wireless communication unit to receive the common upgrade program and the receiver side upgrade program from the transmitter over the wireless channel;
a second storage to store a predetermined common program and a predetermined receiver side program; and
a second CPU to download the common upgrade program and the receiver side upgrade program that are received through the second wireless communication unit onto the second storage, and to upgrade the predetermined common program and the predetermined receiver side program.

13. The system according to claim 12, wherein the receiver comprises:
a buffer to temporarily store the received common upgrade program and the received receiver side upgrade program.

14. The system according to claim 13, wherein the second CPU upgrades the predetermined common program and the predetermined receiver side program, if the temporarily stored common upgrade program and the temporarily stored receiver side program are later versions than the predetermined common program and the predetermined receiver side program.

15. The system according to claim 7, wherein the transmitter is a set-top box to receive and process audio and video signals from an image source, and the receiver is a TV to reproduce the audio and video signals received from the transmitter.

16. The system according to claim 7, wherein the transmitter is a TV to reproduce audio and video signals emitted from the receiver, and the receiver is a set-top box to receive and process the audio and video signals from an image source.

17. A method of upgrading programs in a wireless communication system, the method comprising:
downloading from a memory card a common upgrade program, a transmitter side upgrade program and a receiver side upgrade program;
transmitting the common upgrade program and the receiver side program over a wireless channel to a receiver; and
receiving and storing the common upgrade program and the receiver side upgrade program that are transmitted over the wireless channel.

18. The method according to claim 17, wherein the transmitting of the common upgrade program and the receiver side program comprises:
mounting the memory card on a transmitter;
downloading the common upgrade program and the transmitter side upgrade program from the memory card, and upgrading a predetermined common program and a predetermined transmitter side program, with the common upgrade program and the transmitter side upgrade program; and
transmitting the common upgrade program and the receiver side upgrade program stored in the memory card to the receiver over the wireless channel.

19. The method according to claim 18, wherein mounting of the memory card on the transmitter comprises:
generating a program upgrade request to upgrade the predetermined common program and the predetermined transmitter side program.

20. The method according to claim 18, wherein mounting of the memory card on the transmitter comprises:
automatically downloading the common upgrade program and the transmitter side upgrade program to upgrade the predetermined common program and the predetermined transmitter side program.

21. The method according to claim 18, wherein downloading of the common upgrade program and the transmitter side upgrade program comprises:
checking the version of the common upgrade program, the transmitter side upgrade program, the predetermined common program and the predetermined transmitter side upgrade program;
determining whether the common upgrade program and transmitter side upgrade program are later versions than the predetermined common program and the predetermined transmitter side program; and
upgrading the predetermined common program and the predetermined transmitter side program when the common upgrade program and transmitter side upgrade program are later versions than the predetermined common program and the predetermined transmitter side program.

22. The method according to claim 17, wherein the receiving of the common upgrade program and the receiver side upgrade program comprises:
receiving the common upgrade program and the receiver side upgrade program that are transmitted over the wireless channel; and
upgrading a predetermined common program and a predetermined receiver side program with the received common upgrade program and the received receiver side upgrade program.

23. The method according to claim 17, wherein upgrading of the predetermined common program and the predetermined receiver side program with the received common upgrade program and received receiver side upgrade program comprises:
checking the version of the common upgrade program, the receiver side upgrade program, the predetermined common program and the predetermined receiver side upgrade program;
determining whether the common upgrade program and receiver side upgrade program are later versions than the predetermined common program and the predetermined receiver side program; and
upgrading the predetermined common program and the predetermined receiver side program when the common upgrade program and receiver side upgrade program are later versions than the predetermined common program and the predetermined receiver side program.

24. The method according to claim 17, wherein:
the transmitting of the common upgrade program and the receiver side upgrade program comprises executing the transmitting of the common upgrade program and the receiver side upgrade program in a set-top box to receive and process audio and video signals from an image source; and
the receiving of the common upgrade program and the receiver side upgrade program comprises executing the receiving of the common upgrade program and the receiver side upgrade program in a TV to reproduce the audio and video signals received from a transmitter.

25. The method according to claim 17, wherein:
the transmitting of the common upgrade program and the receiver side upgrade program comprises executing the transmitting of the common upgrade program and the receiver side upgrade program in a TV to reproduce audio and video signals received from a receiver; and
the receiving of the common upgrade program and the receiver side upgrade program comprises executing the receiving of the common upgrade program and the receiver side upgrade program in a set-top box to receive and process the audio and video signals from an image source and outputting the audio and video signals to the TV.

26. A wireless communication system having a program upgrade function, comprising:
a transmitter to download a common upgrade program, a transmitter side upgrade program, and a receiver side upgrade program from a storage medium, to upgrade an existing common program with the downloaded common upgrade program, to upgrade an existing transmitter side upgrade program with the downloaded transmitter side upgrade program, and to transmit the downloaded common upgrade program and the receiver side upgrade program to an external receiver.

27. The system according to claim 26, wherein the transmitter transmits the common upgrade program and the receiver side upgrade program to the external receiver through a wireless channel.

28. The system according to claim 27, wherein the transmitter transmits audio and video signals to the external receiver through the wireless channel.

29. The system according to claim 26, wherein the transmitter communicates with the external receiver through a wireless channel to transmit the common upgrade program, the receiver side upgrade program, and audio and video signals.

30. The system according to claim 29, wherein the external receiver upgrades an existing common program and an existing receiver side program with the received common upgrade program and the received receiver side upgrade program, respectively.

31. The system according to claim 30, wherein the external receiver generates a display signal corresponding to the received video signal.

32. The system according to claim 26, wherein the external receiver upgrades an existing common program and an existing receiver side program with the received common upgrade program and received receiver side program, respectively.

33. The system according to claim 26, wherein the external receiver comprises one of a set-top box and a TV, and the transmitter comprises the other one of the set-top box and the TV.

34. The system according to claim 26, wherein the storage medium is detachably attached to the transmitter.

35. The system according to claim 26, wherein the storage medium comprises one of a memory card and a computer.

36. The system according to claim 26, wherein the storage medium is a single monolithic medium.

37. A method of upgrading programs in a wireless communication system, the method comprising:
downloading a common upgrade program, a transmitter side upgrade program, and a receiver side upgrade program from a storage medium in a transmitter;
upgrading an existing common program and an existing transmitter side program with the downloaded common upgrade program and the downloaded transmitter side upgrade program, respectively, in a transmitter; and
transmitting the downloaded common upgrade program and the downloaded receiver side program to an external receiver.

38. A wireless communication system having a program upgrade function, comprising:
a transmitter to download a transmitter side upgrade program and a receiver side upgrade program from a storage medium to upgrade an existing transmitter side program with the downloaded transmitter side upgrade program, and to transmit the downloaded receiver side upgrade program to an external receiver.

39. The system according to claim 38, wherein the transmitter transmits audio and video signals and the receiver side upgrade program to the external receiver through a wireless channel.

40. The system according to claim 39, wherein the audio and video signals are decoded in the external receiver, and an existing receiver side program stored in the external receiver is updated with the receiver side upgrade program.

41. The system according to claim 39, wherein the transmitter downloads a common upgrade program from the storage medium, upgrades an existing common program with the downloaded common upgrade program, and transmits the downloaded common upgrade program to the external receiver.

42. A wireless communication system having a program upgrade function, comprising:
a transmitter to download a transmitter side upgrade program and a receiver side upgrade program from the single storage medium, to communicate with an external receiver through a wireless communication channel, to store an existing transmitter side program therein, to upgrade the existing transmitter side program with the downloaded transmitter side upgrade program, and to transmit the downloaded receiver side upgrade program to the external receiver through the wireless communication channel so that an existing receiver side program of the external receiver is updated with the downloaded receiver side upgrade program.

43. The system according to claim 42, wherein the transmitter does not use the downloaded receiver side upgrade program to upgrade the existing transmitter side program of the transmitter.
